# EUROPÄISCHE PATENTSCHRIFT

(11) **EP 1 788 860 B1**
(45) Veröffentlichungstag und Bekanntmachung des Hinweises auf die Patenterteilung: **16.04.2008**
(21) Anmeldenummer: 05769920.9
(22) Anmeldetag: 02.08.2005
(51) Int. Cl.: A01G 17/14

(54) **WEINBERGPFAHL**
GRAPE STAKE
ECHALAS

(30) Priorität: 09.08.2004 DE 102004038750
(43) Veröffentlichungstag der Anmeldung: 30.05.2007
(73) Patentinhaber: Dr. Reisacher Winzerbedarf GmbH, 73765 Neuhausen (DE)
(72) Erfinder: Reisacher, Raimund, 76863 Herxheim (DE)
(74) Vertreter: Kesselhut, Wolf
(86) Internationale Anmeldenummer: PCT/EP2005/008351
(87) Internationale Veröffentlichungsnummer: WO 2006/015767

(56) Entgegenhaltungen:
- DE-A1- 4 436 936
- DE-C1- 19 629 023
- DE-U1- 29 911 927

## Beschreibung

Die Erfindung betrifft einen Weinbergpfahl mit einem Schenkel aus Metallblech und einem durch Stanzen und Tiefziehen des Metallblechs geformten Haken gemäß dem Oberbegriff von Anspruch 1, sowie ein Verfahren zur Herstellung eines solchen Pfahls gemäß dem Oberbegriff von Anspruch 15.

Für Drahtrahmen im Wein- und Obstbau werden Pfähle mit offenen oder geschlossenen Metallprofilen verwendet, die an den Schenkeln außenliegende Haken aufweisen, die durch Ausstanzen und Formbiegen von Zungen aus einem ebenen Bereich der Schenkel der Metallprofile geformt werden. Alternativ werden Metallprofile mit innenliegenden Haken verwendet, bei denen die Haken als Stanzlöcher ausprofiliert werden.

Derartige Metallprofile - die nachfolgend als Weinbergpfähle bezeichnet werden - sind beispielsweise aus der DE 44 36 936 C2 (ausgesteifte außen liegende Haken), DE 192 52 597 A1 (S-förmige außen liegende Haken), DE 196 29 023 C1 (taillierte S-förmige außen liegende Haken), sowie DE 299 11927 U1 (ausprofilierte innen liegende Haken) bekannt.

Bei den zuvor genannten Metallprofilen mit außen liegenden Haken werden die Hakenformen als abfallfreie Präge-Stanzungen aus dem Metallblech herausgedrückt.

Es ergibt sich hier zumeist das Problem, dass die Metallzungen der Haken gegenüber der zugehörigen Stanzöffnung liegen und beim Einsatz von Vollernter-Maschinen durch deren Schlagstäbe leicht in die Stanzöffnungen wieder hinein gedrückt werden können, so dass ein anschließendes Einhängen des Drahtes in den betreffenden Haken nicht mehr ohne weiteres möglich ist. Des weiteren sind die an den Haken gebildeten Gleitflächen für die Drähte im Inneren der Ösen technisch bedingt mit Stanzgraten behaftet, so dass bei stumpfen Stanzwerkzeugen das Gleiten des Drahtes oftmals erheblich eingeschränkt ist.

Bei außen liegenden Haken mit eingebrachten Aussteifungen, wie z.B. in der DE 44 36 936 C2 beschrieben, ergibt sich das Problem, dass der Haken nur relativ schwach ausgesteift werden kann und letztlich nur der Hakenansatz gegen Zuschlagen stabilisiert wird. Die Hakenzunge selbst wird durch Vollernter-Schläge stets zugebogen und muß dann manuell oder maschinell wieder geöffnet werden. Eine massive Aussteifung des Hakenansatzes und der Zunge gegen Zuschlagen ist in dieser Anordnung nicht möglich, da bei den hierzu benötigten großen Umformungen der Anschnitt der Hakenzunge in den Hakenansatz hinein reißen würde.

Bei den Metallprofilen mit innen liegenden Haken, die in der Regel mittels Schnittbilder mit Stanzabfall und anschließender Ausprofilierung hergestellt werden, lässt sich zwar eine komplette Aussteifung des Hakens erzielen, es wird jedoch durch das Ausprofilieren ein enormer Materialverbrauch bedingt und das Profil wird durch die zugehörigen großen Stanzlöcher stark geschwächt.

Demgemäß ist es eine Aufgabe der vorliegenden Erfindung, einen Weinbergpfahl der eingangs genannten Art mit einem außen liegenden Haken zu schaffen, bei dem die Einlegeöffnung des Hakens durch Vollernter-Schlägen nicht geschlossen werden kann. Eine weitere Aufgabe der Erfindung besteht darin, ein Verfahren zur Herstellung eines solchen Pfahls zu schaffen.

Diese Aufgabe wird erfindungsgemäß durch die Merkmale von Anspruch 1 und 15 gelöst.

Weitere Merkmale der Erfindung sind in den Unteransprüchen beschrieben.

Gemäß der Erfindung besitzt ein Pfahl mit wenigstens einem Haken zum Halten eines Drahtes im Wein- und Obstbau einen Grundkörper mit wenigstens einem Schenkel aus Metallblech, an dem der Haken durch Stanzen und Biegen eines der Hakenform entsprechenden Stanzmusters aus einem im Wesentlichen flächigen Bereich des Schenkels erzeugt wird, der vorzugsweise eben ist, jedoch auch nach Art einer Sicke ausgesteift sein kann. Der Haken weist hierbei einen aus dem flächigen Bereich herauslaufenden ersten Teilabschnitt auf, der insbesondere eine mit einer Nase vergleichbare geometrische Form aufweist, und durch Tiefziehen des Metallblechs räumlich geformt wird. An den ersten Teilabschnitt, deren Rückenbereich oder Rückenlinie sich im Winkel, beispielsweise z.B. 45°, vom flächigen Bereich, bzw. der Außenoberfläche des Schenkels weg erstreckt, schließt sich ein zweiter ebenfalls rückenförmiger Teilabschnitt an, der einen ersten und zweiten Flügel umfasst, die sich vom Rücken des zweiten Teilabschnitts aus bis an den Aufnahmebereich für den Draht heran erstrecken und diesen definieren. Die Form des ersten und zweiten Flügels wird hierbei durch Ausstanzen eines flächigen Stanzabschnitts aus dem jeweiligen Flügel erhalten, der eine der Form des Randes des Aufnahmebereichs im zweiten Teilabschnitt entsprechende Form aufweist, und der vor dem Tiefziehen des Metallblechs als Stanzausfall aus dem flächigen Bereich entfernt wird.

Ein besonderer Vorteil der erfindungsgemäßen Weinbergpfähle besteht darin, dass die Haken nach dem Ausstanzen des Stanzmusters durch einen Tiefziehvorgang aus einem flächigen Bereich des Metallblechs herausgezogen werden können. Hierbei werden aufgrund der definierten Rundungsradien der ausgestanzten und als Stanzausfall entfernten flächigen Stanzmuster die Kerbspannungen minimiert, wodurch ein ausgezeichneter Materialfluss im Bereich des Hakenursprungs oder Haken-Fußes - nachfolgend auch erster Teilabschnitt genannt - erhalten wird, der dazu führt, dass die Hakenrücken bei einer Materialstärke von 1 bis 3 mm um wenigstens 4 mm aus dem im Wesentlichen flächigen Bereich des Schenkels herausziehbar sind, ohne dass es zu einer Rissbildung im Material kommt.

Wie der Anmelder gefunden hat, kann hierbei durch einen im Bereich des Aufnahmebereichs für den Draht in erfindungsgemäßer Weise vorgesehenen flächigen Stanzabschnitt mit einem Querschnitt von beispielsweise 1,5 bis 2 mm in Verbindung mit dem Tiefziehvorgang beim fertigen Haken ein Aufnahmebereich für den Draht erhalten werden, der eine verglichen mit der Fläche des entfernten Stanzabschnitts um mehr als den Faktor 1,5 vergrößerte Öffnungsfläche aufweist, wodurch eine sehr gute Beweglichkeit des Drahtes im Aufnahmebereich erhalten wird. Anders ausgedrückt kann das Stanzloch wesentlich kleiner ausgeführt werden, da das Material beim Ausformen des Hakens stark gedehnt wird, also quasi wächst, wohingegen beim Profilieren der bekannten Haken mittels Profilierwalzen ein Umformen weitgehend im elastischen Bereich mit nur geringer Dehnung erfolgt.

Des weiteren kann der Haken hierdurch sehr tief aus dem Material herausgedrückt werden, was sehr tiefe Hakenöffnungen zum Einlegen der Drähte sowie auch große ösenförmige Aufnahmebereiche ohne zusätzlichen Materialeinsatz - und damit ohne Mehrkosten - erlaubt.

Ein weiter Vorteil des erfindungsgemäßen Pfahls besteht darin, dass im Vergleich zu Pfählen mit innen liegenden Haken, bei denen die Einlegeöffnung und der Aufnahmebereich für den Draht in einem hierzu eigens im Metallblech geformten Falz ausgebildet sind, eine Materialeinsparung im Bereich von ca. 15 % erhalten wird, da kein zusätzliches Material für den Falz veranschlagt werden muss.

Ein weiterer Vorteil der erfindungsgemäßen Weinbergpfähle besteht darin, dass diese gewünschten falls leicht mit einfachen außen liegenden Haken des Stands der Technik kombiniert werden können. Im unteren Bereich des Pfahls werden dabei bevorzugt schmalere Haken des Stands der Technik eingesetzt, so dass das Profil nicht unnötig geschwächt wird und die dort auftretenden maximalen Drehmomente optimal aufgefangen werden können. Im Kopfbereich des Pfahls können ebenfalls einfache außen liegende Haken eingesetzt werden, da dieser Bereich von Vollerntern in der Regel nicht bearbeitet wird und der Pfahlkopf beim Einschlagen nicht unnötig geschwächt wird.

Weiterhin eröffnet die erfindungsgemäße Ausgestaltung der Haken den Vorteil, dass für die Ausformung des Hakenrückens im Bereich des ersten, zweiten und dritten Teilabschnitts unterschiedliche Biegeradien, bzw. Biegewinkel des Rückenkamms gewählt werden können, die im Wege des Tiefziehens mit ein und demselben Tiefziehwerkzeug eingebracht werden können. Demgegenüber kann beim Profilieren der zuvor genannten Haken des Standes der Technik mittels Profilierwalzen zwangsläufig nur mit einer durch die Profilierwalzen vorgegebenen Kammgeometrie gearbeitet werden.

Gemäß der bevorzugten Ausführungsform der Erfindung, die sich durch insbesondere im Zusammenhang mit Blechen mit einer Blechstärke im Bereich zwischen 1 und 3 mm eignet, wird der erste Teilabschnitt so weit aus dem flächigen Bereich des Schenkelmaterials herausgedrückt, dass sich der vorzugsweise gradlinig im Winkel verlaufende Rücken des ersten Teilabschnitts wenigstens um 4 mm, vorzugsweise jedoch um 6 bis 10 mm über den flächigen Bereich hinaus erstreckt. Hierdurch lässt sich eine sehr große Höhe der Öffnungen zum Einlegen des Drahtes sowie auch eine ausreichende Größe des Aufnahmebereichs für Standarddrähte mit einem Drahtdurchmesser von z.B. 2 bis 3 mm erhalten, wobei gleichzeitig jedoch trotz der durch den Tiefziehvorgang bedingten Verringerung der Dicke des Materials im Bereich des ersten Teilabschnitts eine ausreichende Festigkeit erhalten wird.

Gemäß einer weiteren Ausführungsform der Erfindung erstreckt sich der Rücken des sich stetig an den ersten Teilabschnitt anschließenden zweiten Teilabschnitts im Wesentlichen parallel zur Außenfläche des Schenkels, und weist hierbei vorzugsweise eine im Wesentlichen V- oder U-förmige Querschnittsform auf, wodurch sich eine vorteilhaft stabile und gegen die Einwirkung der Schlagstäbe von Vollerntern resistente Geometrie ergibt, die zudem auch mit einfach geformten Umformwerkzeugen oder Tiefziehwerkzeugen fertigungstechnisch effizient und kostengünstig erhalten werden kann.

Der Öffnungswinkel des V-förmigen Querschnitts, oder anders ausgedrückt, der Winkel, den die sich vom Rücken des ersten Teilabschnitts aus zur Außenfläche des Schenkels hin erstreckenden Seitenflanken oder Seitenflächen einnehmen, beträgt vorzugsweise weniger als 120°, insbesondere 70 bis 80°. Hierdurch lässt sich bei optimalem Materialfluss während des Tiefziehvorgangs eine hohe Aussteifung des ersten Teilabschnitts erhalten.

Bei dieser Ausführungsform der Erfindung weist der Öffnungswinkel des zweiten Teilabschnitts vorzugsweise nicht denselben Öffnungswinkel wie der erste Teilabschnitt auf, sondern die die V-Form des zweiten Teilabschnitts definierenden ersten und zweiten Flügel erstrecken sich in einem kleineren Winkel als im Bereich des ersten Teilabschnitts in Richtung zur Außenfläche des Schenkels. Durch die Wahl unterschiedlicher Winkel wird der Vorteil erhalten, dass der Hakenrücken im zweiten Teilabschnitt auf Grund der sickenartigen Funktion, die mit dem kleineren Winkel verbunden ist, eine höhere Steifigkeit und damit Resistenz gegen Vollernterschläge aufweist, obwohl der Haken im Bereich des zweiten Teilabschnitts durch den im Bereich des zweiten Teilabschnitts liegenden Aufnahmebereich gegenüber dem ersten Teilabschnitt geschwächt ist.

Obgleich der Haken im einfachsten Falle als Einfachhaken ausgebildet sein kann, wird dieser bevorzugt in Kombination mit einem spiegelbildlich hierzu ausgestalteten weiteren Haken - nachfolgend auch als Gegenhaken bezeichnet - in Form eines Doppelhakens eingesetzt.

Hierbei hat es sich gemäß einer besonders bevorzugten Ausführungsform der Erfindung als vorteilhaft herausgestellt, wenn der Haken einen sich vom zweiten Teilabschnitt aus nach Art eines Widerhakens in Richtung zum flächigen Bereich hin erstreckenden dritten Teilabschnitt aufweist, der sowohl im Falle eines Einfachhakens, als auch im Falle eines Doppelhakens oder Gegenhakens ein freies Herausgleiten des Drahtes aus dem Aufnahmebereich verhindert.

Der dritte Teilabschnitt kann hierbei beispielsweise als eine sich vom Rücken des zweiten Teilabschnitts aus im Winkel in Richtung zur Außenfläche des Schenkels erstreckende Spitze oder Zunge ausgestaltet sein, die gewünschtenfalls auch eine unsymmetrische Form besitzen kann, welche beim Einsatz des erfindungsgemäßen Pfahls in Hanglagen auch bei großen Hangneigungswinkeln eine ausreichende Beweglichkeit des Drahtes im Aufnahmebereich sicherstellt.

Gemäß der bevorzugten Ausführungsform der Erfindung weist der dritte Teilabschnitt jedoch einen ersten und einen zweiten weiteren Flügel auf, die sich vom Rücken des dritten Teilabschnitts aus, welcher vorzugsweise gradlinig mit dem Rücken des zweiten Teilabschnitts verläuft, seitlich in Richtung zur Außenfläche des Schenkels erstrecken, wobei zumindest einer der weiteren Flügel eine größere Länge aufweist als der zugehörige oder beide Flügel des zweiten Teilabschnitts.

Hierdurch wird sichergestellt, dass der Draht durch die Randflächen des ersten und zweiten weiteren Flügels, die den Aufnahmebereich in Richtung zur Einlegeöffnung des Drahtes hin begrenzen, gegen ein Herausgleiten aus dem Aufnahmebereich gesichert wird.

Der erste und zweite weitere Flügel sind hierbei bevorzugt integral mit dem ersten und zweiten Flügel des zweiten Teilabschnitts gebildet, und gehen vorzugsweise stetig ineinander über. Hierdurch ergibt sich der Vorteil, dass der erfindungsgemäße Haken auf einfache Weise durch Ausstanzen lediglich eines sehr kleinen zusammenhängenden flächigen Stanzabschnitts durch Tiefziehen hergestellt werden kann, wobei der Stanzausfall - und damit der Materialeinsatz - bei einer vorgegebenen Festigkeit des Hakens minimal gehalten werden kann.

Bei der bevorzugten Ausführungsform der Erfindung sind der erste und zweite weitere Flügel ebenfalls V-förmig zueinander angeordnet, so dass sich eine V-förmige Querschnittsform des dritten Teilabschnitts ergibt, wobei die Spitze des "V" in gleicher Weise wie bei den anderen beiden Teilabschnitten den durchlaufenden Hakenrücken bildet.

Auch bei dieser Ausführungsform der Erfindung ist es vorgesehen, dass der Winkel, den die beiden weiteren Flügel einschließen, vorzugsweise noch kleiner als der Winkel der beiden Flügel des zweiten Teilabschnitts ist. Der Öffnungswinkel der beiden weiteren Flügel kann hierbei beispielsweise weniger als 60° betragen. Durch die Wahl eines kleineren Öffnungswinkels des dritten Teilabschnitts ergibt sich der Vorteil, dass die zum Auffangen oder zum Zurückhalten des Drahtes wirksame Projektion des ersten und zweiten weiteren Flügels größer ist, als bei einem großen Öffnungswinkel.

Zudem kann gewünschten Falls durch ein weiteres Zusammenbiegen des ersten und zweiten weiteren Flügels von außen her die Durchtrittsöffnung des zwischen dem ersten und dem zweiten weiteren Flügel und der gegenüberliegenden Stirnfläche oder Kante des sich im Wesentlichen parallel zur Außenfläche des Schenkels erstreckenden Führungsabschnitts weiter verkleinert werden, um einem Herausspringen des Drahtes zusätzlich entgegen zu wirken. Die Anlagekante des Führungsabschnitts kann hierbei weiterhin in vorteilhafter Weise durch ein Aufstellen oder Herauswölben des Metallblechs beim Tiefziehen, bzw. durch eine nicht vollständig im Winkel von 90° zu der Grundfläche des erfindungsgemäßen Hakens, sondern geringfügig geneigt hierzu verlaufende Fläche des Schenkels erhalten werden. Hierdurch ergibt sich der Vorteil, dass die Außenfläche des Schenkels den Draht gegen den Widerhaken drückt, wodurch eine leichtere Arretierung desselben ermöglicht wird.

Der erste und zweite weitere Flügel besitzen bei der bevorzugten Ausführungsform der Erfindung - von der Seite aus betrachtet - die Form eines Schuhs oder eines Trapezes, derart, dass sich die Fläche des ersten und/oder zweiten weiteren Flügels ausgehend vom Hakenrücken in Richtung zur Außenfläche des Schenkels hin verbreitert.

Obgleich der erste und der zweite weitere Flügel insbesondere beim Einsatz des erfindungsgemäßen Pfahls in ebenen Weinanbaugebieten eine im Wesentlichen gleiche Länge aufweisen, besitzt der erste weitere Flügel gemäß einer weiteren Ausführungsform der Erfindung, die sich insbesondere für Hanglagen eignet, eine größere Länge als der zweite weitere Flügel. Bei dieser Ausführungsform der Haken wird der damit versehene Pfahl in der Weise aufgestellt, dass der längere erste weitere Flügel talseitig und der zweite kürzere weitere Flügel auf der Bergseite des Hangs angeordnet ist.

Durch diese unsymmetrische Anordnung der beiden weiteren Flügel des dritten Teilabschnitts ergibt sich eine sehr kurze und kompakte Bauform des Hakens, die trotzdem eine hohe Verschränkbarkeit des Drahtes in Steillagen, und damit auch den Einsatz bei vergleichsweise großen Hangneigungswinkeln erlaubt.

Bei der bevorzugten Ausführungsform der Erfindung, bei der der zuvor beschriebene Haken mit erstem, zweitem und drittem Teilabschnitt vorzugsweise zusammen mit einem zumindest einen ersten und zweiten Teilabschnitt aufweisenden Gegenhaken als Doppelhaken eingesetzt wird, weist der Stanzausfall vorzugsweise eine im Wesentlichen H-, M-, oder auch U-förmige Gestalt auf, wobei die Konturen des "H", oder "M" bzw. des "U" rund und geschwungen ausgebildet sind, wodurch die Gefahr einer Rissbildung beim Tiefziehen erheblich verringert wird.

Wie der Anmelder gefunden hat, kann durch diese Form des Stanzausfalls bei maximaler Dehnung des Materials, insbesondere im Bereich des ersten Teilabschnitts, die Fläche des entfernten Stanzabschnitts minimal gehalten werden, so dass bei maximaler Festigkeit ein minimaler Materialeinsatz benötigt wird.

Gemäß einer weiteren Ausgestaltung des der Erfindung zu Grunde liegenden Gedankens zeichnet sich ein Verfahren zur Herstellung des zuvor beschriebenen Pfahls dadurch aus, dass zuerst ein Metallblech mit einem im Wesentlichen flächigen Bereich bereitgestellt wird, auf dem ein vorzugsweise M- oder H-förmiges Stanzmuster mit wenigstens einem flächigen Stanzabschnitt ausgestanzt wird, wobei der flächige Bereich des Stanzmusters nach dem Ausstanzen aus dem Metallblech entfernt wird. Anschließend wird das Metallblech im flächigen Bereich durch Tiefziehen des Materials mittels eines beidseitig auf den flächigen Bereich einwirkenden Prägewerkzeugs in der Weise plastisch verformt, dass sich ein sehr stabiler, im Wesentlichen geschlossener, vorzugsweise im Wesentlichen dreiecksförmiger räumlich geformter erster Teilabschnitt und ein sich daran anschließender, mit einem und ersten zweiten Flügel versehener zweiter Teilabschnitt ergibt, der den Aufnahmebereich für den Haken begrenzt. Vorzugsweise gleichzeitig hierzu wird ein im Wesentlichen spiegelbildlich zu dem zuvor beschriebenen Haken ausgestalteter Gegenhaken aus dem gleichen flächigen Bereich mit herausgeformt, was in vorteilhafter Weise durch das gleiche Prägewerkzeug oder Tiefziehwerkzeug erfolgt, wobei sich das Metallblech während des Stanz- und Tiefziehvorgangs im Gegensatz zu einer Umformung mittels rotierender Profilierwalzen in Ruhe befindet.

Gemäß einer bevorzugten Ausführungsform des erfindungsgemäßen Verfahrens wird das Metallblech bevorzugt vor dem Tiefziehen des Materials profiliert, um dieses in die dem offenen U- oder V-förmigen Profil des Pfahls entsprechende Form zu bringen. Hierdurch ergibt sich der Vorteil, dass auch bei Pfählen mit vergleichsweise schmalen Schenkelflächen außen liegende Haken mit einer Breite erhalten werden können, die nahezu der Breite des Schenkels entspricht.

Die Erfindung wird nachfolgend mit Bezug auf die Zeichnungen anhand bevorzugter Ausführungsformen beschrieben.

In den Zeichnungen zeigen:
- Fig. 1: eine schematische räumliche Darstellung eines erfindungsgemäßen Weinbergpfahls mit erfindungsgemäßen Haken, die als Einzelhaken ausgebildet sind,
- Fig. 2: eine Querschnittsansicht durch ein erfindungsgemäßes Profil mit einem erfindungsgemäßen Haken mit einem unsymmetrisch geformten dritten Teilabschnitt sowie einem schematisch eingezeichneten Draht,
- Fig. 3a, 3b: eine Querschnitts- und Seitenansicht durch eine erste Ausführungsform eines erfindungsgemäßen Doppelhakens, bei dem der Haken und der Widerhaken lediglich einen ersten und zweiten Teilabschnitt aufweisen,
- Fig. 3c,3d: das zu dem Haken der Fig. 3a, Fig. 3b zugehörige Stanzmuster für einen Haken mit im Wesentlichen horizontal verlaufender Einlegeöffnung sowie schräg verlaufender Einlegeöffnung,
- Fig. 4a, 4b: eine weitere Ausführungsform eines als Doppelhaken ausgestalteten erfindungsgemäßen Hakens mit einem als Widerhaken wirkenden dritten Teilabschnitt und einem einen ersten und zweiten Teilabschnitt aufweisenden Gegenhaken,
- Fig. 4c, 4d: Beispiele für Stanzmuster von in den Fig. 4a und 4b gezeigten Haken, bei denen der erste und zweite weitere Flügel symmetrisch ausgestaltet sind,
- Fig. 5a, 5b: eine weitere Ausführungsform eines erfindungsgemäßen Hakens, bei dem der erste und zweite weitere Flügel trapez-, bzw. schuhförmig ausgestaltet sind, um eine vergrößerte Führungs- oder Anlagefläche des Drahtes zu erzeugen,
- Fig. 5c: eine Querschnittsansicht durch eine weitere Ausführungsform des in Fig. 5b gezeigten Hakens, bei dem der erste und zweite weitere Flügel unsymmetrisch ausgestaltet sind, und
- Fig. 5d: das zu Fig. 5c gehörige Stanzmuster.

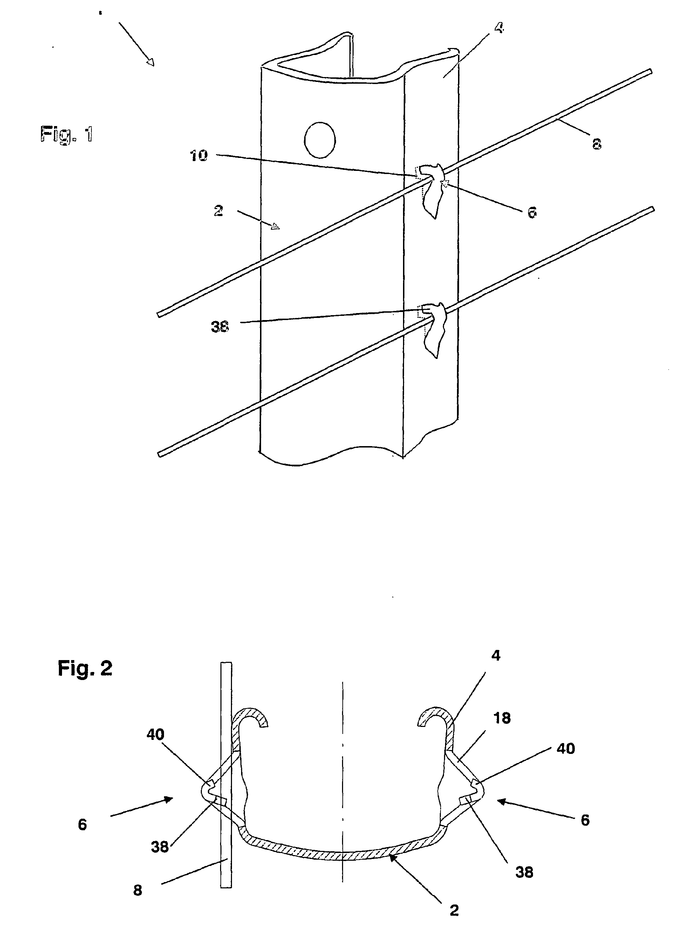

Wie in Fig. 1 gezeigt ist, umfasst ein erfindungsgemäßer Weinbergpfahl 1 einen Grundkörper 2 aus Metallblech, der als ein Profil mit einer im Wesentlichen U-förmigen Querschnittsform ausgestaltet ist, welches wenigstens einen Schenkel 4 aufweist, an dem wenigstens ein Haken 6 zum Halten eines Drahtes 8 aufgenommen ist.

Der Haken 6 wird hierbei durch Stanzen und Biegen eines der Hakenform entsprechenden Stanzmusters aus einem in Fig. 1 sowie Fig. 3c, 3d, 4c und 4d in gepunkteten Linien angedeuteten flächigen Bereichs 10 aus dem Schenkel 4 durch Tiefziehen geformt.

Wie der Darstellung der Figuren 2, 3a, 3b, 4a, 4b und 5a, 5b, 5c zu entnehmen ist, weist der erfindungsgemäße Haken 6 einen ersten Teilabschnitt 12 auf, der von der Seite aus betrachtet im Wesentlichen dreiecksförmig ausgestaltet ist, und einen Rücken 16 aufweist, der sich vorzugsweise geradlinig in einem Winkel von ca. 45° ansteigend von der Außenfläche des Schenkels 4, bzw. dem im Wesentlichen flächigen Bereich 10 weg nach außen erstreckt.

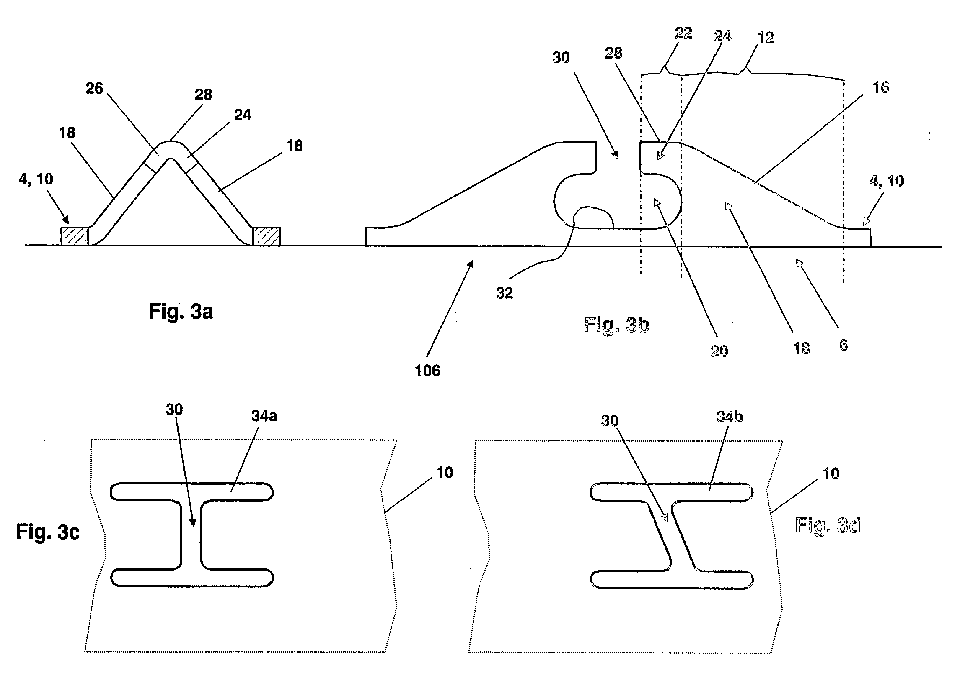

Wie sich anhand der Querschnittsansicht des ersten Teilabschnitts in den Fig. 3a, 4a und 5a erkennen lässt, weist der erste Teilabschnitt 12 eine im Wesentlichen V-förmige Querschnittsform auf, wobei der Öffnungswinkel der beiden Flanken 18 des ersten Teilabschnitts 12, in denen das Metallblech durch den Tiefziehvorgang in hohem Maße plastisch deformiert ist, im Bereich < 120°, vorzugsweise < 90°, und besonders bevorzugt im Bereich zwischen 70 und 80° liegt.

Der erste Teilabschnitt 12 weist hierbei vorzugsweise eine im Wesentlichen dreiecksförmige Grundfläche auf, die sich ausgehend von dem an den ersten Teilabschnitt 12 angrenzenden Aufnahmebereich 20 für den Draht in Richtung zur rechten Seite in den Figuren hin verjüngt.

An den ersten Teilabschnitt 12 schließt sich ein zweiter Teilabschnitt 22 an, der gemäß der Darstellung von Fig. 3a einen ersten Flügel 24 und einen zweiten Flügel 26 besitzt, die sich im Querschnitt vom Rücken 28 des zweiten Teilabschnitts aus in Richtung zur Außenfläche des Schenkels 4 erstrecken, wobei der von den Flügeln 24, 26 eingeschlossene Winkel gemäß der Ausführungsform von Fig. 3a, 3b die gleiche Größe wie der Öffnungswinkel der Flanken 18 des ersten Teilabschnitts 12 besitzt.

Wie der Darstellung von Fig. 3a, Fig. 3b weiterhin entnommen werden kann, wirkt der Haken 6 mit einem identisch ausgestalteten, jedoch spiegelbildlich angeordneten Gegenhaken 106 zusammen, um einen Doppelhaken zu bilden.

Hierbei wird zwischen den zweiten Teilabschnitten der beiden Haken 6 und 106, bzw. zwischen deren Stirnflächen eine Einlegeöffnung 30 begrenzt, durch die hindurch der Draht in den Aufnahmebereich 20 eingeführt werden kann, der in diesem Falle eine einem offenen Oval entsprechende Querschnittsform aufweist, dessen schenkelnahe Seite als Führungsabschnitt 32 für den Draht 8 dient.

Gemäß des in den Fig. 3c gezeigten Beispiels eines dem Haken von Fig. 3a und 3b zugeordneten Stanzmusters 34a, das bei der Herstellung des erfindungsgemäßen Hakens oder Doppelhakens als Stanzausfall aus dem Metallblech des Schenkels 4 entfernt wird, verläuft die Einlegeöffnung 30 im rechten Winkel zur Längsachse der Haken 6, 106. Darüber hinaus besteht die Möglichkeit, die Einlegeöffnung 30 auch im Winkel von z.B. 20° schräg zur Längsachse des Hakens oder Doppelhakens verlaufen zu lassen, um ein Herausspringen des eingelegten Drahtes zu erschweren. Ein Beispiel eines zugehörigen Stanzmusters 34b ist in Fig. 3d gezeigt.

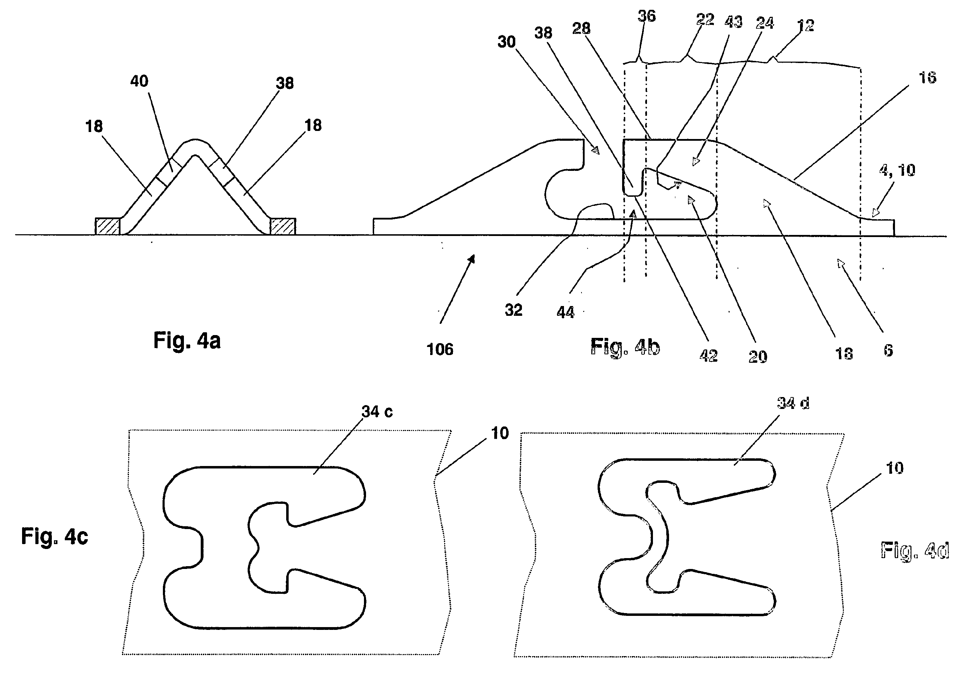

Wie der Darstellung von Fig. 4a und Fig. 4b zu entnehmen ist, weist der erfindungsgemäße Haken 6 gemäß einer weiteren Ausführungsform der Erfindung einen dritten Teilabschnitt 36 auf, der einen ersten und zweiten weiteren Flügel 38, 40 besitzt, welcher sich jeweils vom Rücken 28 des dritten Teilabschnitts aus herab in Richtung zur Außenfläche des Schenkels 4 erstreckt, wobei der Öffnungswinkel zwischen den beiden weiteren Flügeln 38, 40 vorzugsweise noch kleiner als der Öffnungswinkel der Flügel 24, 26 des zweiten Teilabschnitts 22 ist.

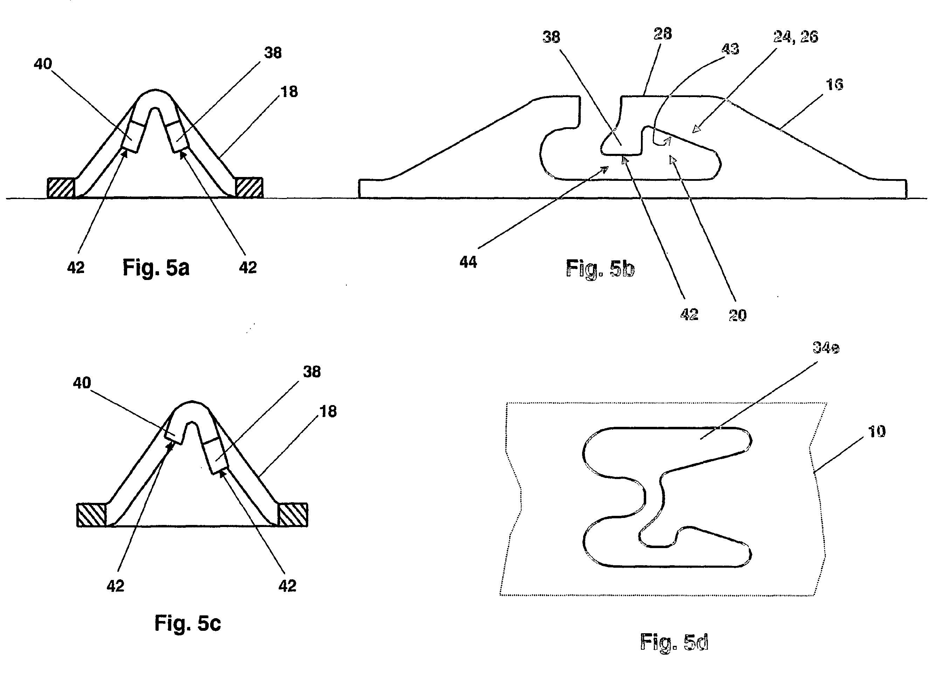

Gemäß der Darstellung von Fig. 4a, 4b und 5a, 5b erstrecken sich die Stirnflächen 42 der ersten und zweiten weiteren Flügel 38, 40 über die als Anlagekanten 43 des Aufnahmebereichs 20 dienenden Stirnflächen des ersten und zweiten Flügels 24, 26 hinaus, und begrenzen stirnseitig eine Durchtrittsöffnung 44 des Führungsabschnitts 32, durch welche hindurch der Draht 8 in den Aufnahmebereich 20 eingeführt wird.

Wie der Darstellung der beispielhaften Stanzmuster 34c und 34d in Fig. 4c und 4d für die zuvor beschriebene Ausführungsform mit einem dritten Teilabschnitt 36 zu entnehmen ist, weisen der erste und der zweite weitere Flügel 38, 40 vorzugsweise die gleiche Länge auf, und sind im gleichen Winkel wie der erste und zweite Flügel 24, 26 des zweiten Teilabschnitts 22 angeordnet.

Gemäß der weiteren, in Fig. 5b und 5c gezeigten Ausführungsform der Erfindung weist der erste weitere Flügel 38 eine größere Länge als der zweite weitere Flügel 40 auf, wobei diese Ausführungsform des Pfahls bevorzugt in Hanglagen eingesetzt wird, und der Pfahl in der Weise ausgerichtet ist, dass sich der längere weitere erste Flügel 38 auf der Talseite befindet.

Hierdurch wird der für den Draht 8 verfügbare Raum des Aufnahmebereichs 20 auf der Bergseite so weit vergrößert, dass der Draht auch über den Teil des Aufnahmebereichs 20 hinweg verlaufen kann, der bei einer symmetrischen Ausgestaltung der weiteren Flügel durch den bergseitigen Flügel abgedeckt würde.

Bei der in Fig. 5b, 5c und 5d weiterhin dargestellten Ausführungsform der Erfindung ist der erste weitere Flügel 38 und vorzugsweise auch der zweite weitere Flügel 40 schuhförmig ausgestaltet, derart, dass die den Führungsabschnitt 32 begrenzende Stirnfläche 42 des zugehörigen weiteren Flügel eine größere Länge aufweist als der Flügel im Bereich des Rückens 28, wodurch die Länge der Stirnflächen 42 und damit die Länge des Führungsabschnitts 32 zur Führung des Drahtes 8 insgesamt vergrößert wird.

Das zugehörige Stanzmuster 34e für einen unsymmetrisch geformten dritten Teilabschnitt 36 mit schuhförmig ausgestalteten weiteren Flügeln 38, 40 ist in Fig. 5d dargestellt. Anhand des Stanzmusters 34e lässt sich erkennen, dass die plastische Deformation des Material während des Tiefziehvorgangs dazu führt, dass die Größe des Aufnahmebereichs 20 gegenüber der dem Aufnahmebereich 20 zugeordneten Fläche des Stanzmusters erfindungsgemäß vergrößert ist.

### Bezugszeichenliste

- 1: Weinbergpfahl
- 2: Grundkörper
- 4: Schenkel
- 6: Haken
- 8: Draht
- 10: flächiger Bereich
- 12: erster Teilabschnitt
- 14: Außenfläche
- 16: Rücken
- 18: Flanke des ersten Teilabschnitts
- 20: Aufnahmebereich für Draht
- 22: zweiter Teilabschnitt
- 24: erster Flügel
- 26: zweiter Flügel
- 28: Rücken des zweiten/dritten Teilabschnitts
- 30: Einlegeöffnung
- 32: Führungsabschnitt
- 34: flächiges Stanzmuster
- 36: dritter Teilabschnitt
- 38: erster weiterer Flügel
- 40: zweiter weiterer Flügel
- 42: Stirnfläche des weiteren Flügels
- 43: äußere Anlagekante/Stirnfläche
- 44: Durchtrittsöffnung
- 106: Gegenhaken

## Patentansprüche

1. Pfahl (1) mit wenigstens einem Haken (6) zum Halten eines Drahtes (8) im Wein- und Obstbau, der einen Grundkörper (2) mit wenigstens einem Schenkel (4) aus Metallblech aufweist, an dem der Haken (6) durch Stanzen und Biegen eines der Hakenform entsprechenden Stanzmusters (34a, 34b, 34c, 34d) aus einem im Wesentlichen flächigen Bereich (10) des Schenkels (4) erzeugt wird, wobei der Haken (6) einen ersten, aus dem flächigen Bereich (10) herauslaufenden, durch Tiefziehen des Metallblechs räumlich geformten ersten Teilabschnitt (12), sowie einen sich daran anschließenden, einen Aufnahmebereich (20) für den Draht (8) begrenzenden zweiten Teilabschnitt (22) umfasst,
**dadurch gekennzeichnet,**
**dass** der erste und zweite Teilabschnitt (12, 22) rückenförmig ausgestaltet sind, wobei der zweite Teilabschnitt (22) einen sich beiderseits des Rückens (28) in Richtung zur Außenfläche des Schenkels (4) hin bis an den Aufnahmebereich (20) heran erstreckenden ersten und zweiten Flügel (24, 26) besitzt, und dass das Stanzmuster wenigstens einen den Aufnahmebereich (20) für den Draht (8) definierenden flächigen Stanzabschnitt (34a, 34b, 34c, 34d, 34e) aufweist, der vor dem Tiefziehen des Metallblechs als Stanzausfall aus dem flächigen Bereich (10) entfernt wird.

2. Pfahl nach Anspruch 1,
**dadurch gekennzeichnet,**
**dass** der Rücken (16) des ersten Teilabschnitts sich um wenigstens 4 mm, insbesondere um 6 bis 10 mm, über den flächigen Bereich (10) hinaus erstreckt.

3. Pfahl nach einem der vorhergehenden Ansprüche,
**dadurch gekennzeichnet,**
**dass** der Rücken (28) im Bereich des zweiten Teilabschnitts (22) im Wesentlichen parallel zur Außenfläche des Schenkels (4) verläuft.

4. Pfahl nach einem der vorhergehenden Ansprüche,
**dadurch gekennzeichnet,**
**dass** der erste Teilabschnitt (12) und der zweite Teilabschnitt (22) eine im Wesentlichen V- oder U-förmige Querschnittsform aufweisen.

5. Pfahl nach Anspruch 4,
**dadurch gekennzeichnet,**
**dass** der Öffnungswinkel des V- oder U-förmigen Querschnitts des ersten Teilabschnitts (12) kleiner als 120° ist, und dass der Öffnungswinkel des zweiten Teilabschnitts (22) kleiner als der Öffnungswinkel des ersten Teilabschnitts (12) ist.

6. Pfahl nach einem der vorhergehenden Ansprüche,
**dadurch gekennzeichnet,**
**dass** der Haken (6) einen sich vom zweiten Teilabschnitt (22) aus nach Art eines Widerhakens in Richtung zur Außenfläche des Schenkels (4) hin erstreckenden dritten Teilabschnitt (36) aufweist.

7. Pfahl nach Anspruch 6,
**dadurch gekennzeichnet,**
**dass** der dritte Teilabschnitte (36) einen ersten und zweiten, in Richtung zur Außenfläche des Schenkels hin sich erstreckenden weiteren Flügel (38, 40) umfasst.

8. Pfahl nach Anspruch 7,
**dadurch gekennzeichnet,**
**dass** der erste Flügel (24) und der erste weitere Flügel (38) sowie der zweite Flügel (26) und der zweite weitere Flügel (40) entlang des Rückens (18) des zweiten Teilabschnitts (22) ineinander übergehen.

9. Pfahl nach einem der Ansprüche 5 bis 8,
**dadurch gekennzeichnet,**
**dass** der dritte Teilabschnitt (36) eine im Wesentlichen V- oder U-förmige Querschnittsform aufweist, und dass der Öffnungswinkel des dritten Teilabschnitts (36) kleiner ist als der Öffnungswinkel des zweiten Teilabschnitts (22).

10. Pfahl nach einem der Ansprüche 6 bis 9,
**dadurch gekennzeichnet,**
**dass** sich die Fläche des ersten und/oder zweiten weiteren Flügels (38, 40) vom Rücken (18) des dritten Teilabschnitts (36) aus betrachtet in Richtung zur Außenfläche des Schenkels (4) hin im Wesentlichen schuh- oder trapezförmig erweitert.

11. Pfahl nach einem der Ansprüche 6 bis 10,
**dadurch gekennzeichnet,**
**dass** der erste weitere Flügel (38) die gleiche Länge wie der zweite weitere Flügel (40) aufweist.

12. Pfahl nach Anspruch 6 bis 10,
**dadurch gekennzeichnet,**
**dass** der erste weitere Flügel (38) eine größere Länge als der zweite weitere Flügel (40) aufweist.

13. Pfahl nach einem der vorhergehenden Ansprüche,
**dadurch gekennzeichnet,**
**dass** der Haken (6) zur Bildung eines Doppelhakens mit einem gegenüberliegenden weiteren Haken (106) zusammenwirkt.

14. Pfahl nach Anspruch 13,
**dadurch gekennzeichnet,**
**dass** das flächige Stanzmuster (34a, 34b, 34c, 34d) eine im Wesentlichen H-, M-, oder U-förmige Gestalt mit gerundeten Ecken besitzt.

15. Verfahren zur Herstellung eines Pfahls (1) nach einem der vorhergehenden Ansprüche, **gekennzeichnet durch** die folgenden Verfahrensschritte:
Bereitstellen von Metallblech mit einem im Wesentlichen flächigen Bereich (10),
Ausstanzen eines M-, H-, oder U-förmigen Stanzmusters (34a, 34b, 34c, 34d) mit wenigstens einem flächigen Stanzabschnitt aus dem flächigen Bereich des Metallblechs;
Entfernen des flächigen Stanzabschnitts aus dem Metallblech;
Tiefziehen eines Hakens (6) mit einem ersten aus dem flächigen Bereich herauslaufenden räumlich geformten rückenförmigen Teilabschnitt (12) sowie einem sich daran anschließenden, den Aufnahmebereich (20) für den Haken begrenzenden zweiten rückenförmigen Teilabschnitt (22) mittels eines auf den flächigen Bereich beiderseits des Metallblechs einwirkenden Prägewerkzeugs;
Verformen des Metallblechs zu einem Profil mit wenigstens einem Schenkel (4), derart, dass der flächige Bereich im Bereich des Schenkels angeordnet ist.

## Claims

1. Stake: (1), comprising at least one hook (6) for holding a wire (S) in viticulture and fruit farming and having a base member (2) with at least one sheet metal limb (4) on which the hook (6) is produced by stamping and bending a stamping pattern (34a, 34b, 34c, 34d) corresponding to the shape of the hook, from a substantially two-dimensional region (10) of the limb (4), the hook (6) comprising a first portion (12), which extends from the two-dimensional region (10) and is spatially formed by deep-drawing the sheet metal, and a portion (22) adjacent thereto, which defines a receiving region (20) for the wire (8), **characterised in that** the first and second portions (12, 22) are formed so as to be ridge-shaped, the second portion (22) comprising a first and second wing (24, 26) which extend on both sides of the ridge (28) in the direction of the outer surface of the limb (4) as far as the receiving region (20), and **in that** the stamping pattern has at least one two-dimensional stamped portion (34a, 34b, 34c, 34d) which defines the receiving region (20) for the wire (8) and which is removed from the two-dimensional region (10) as stamping waste before the deep-drawing of the sheet metal.

2. Stake according to claim 1, **characterised in that** the ridge (16) of the first portion extends over the two-dimensional region (10) by at least 4 mm, in particular by 6 to 10 mm.

3. Stake according to any one of the preceding claims, **characterised in that** the ridge (28) extends substantially parallel to the outer surface of the limb (4) in the region of the second portion (22).

4. Stake according to any one of the preceding claims, **characterised in that** the first portion (12) and the second portion (22) have a substantially V-shaped or U-shaped cross-section.

5. Stake according to claim 4, **characterised in that** the aperture angle of the V-shaped or U-shaped cross-section of the first portion (12) is less than 120°, and **in that** the aperture angle of the second portion (22) is less than the aperture angle of the first portion (12).

6. Stake according to any one of the preceding claims, **characterised in that** the hook (6) has a third portion (36) which extends outwards from the second portion (22), in the manner of a barb, in the direction of the outer surface of the limb (4).

7. Stake according to claim 6, **characterised in that** the third portion (36) comprises a first and second further wing (38, 40) which extend in the direction of the outer surface of the limb.

8. Stake according to claim 7, **characterised in that** the first wing (24) and the first further wing (38), as well as the second wing (26) and the second further wing (40), merge into one another along the ridge (18) of the second portion (22).

9. Stake according to any one of claims 5 to 8, **characterised in that** the third portion (36) has a substantially V-shaped or U-shaped cross-section, and **in that** the aperture angle of the third portion (36) is smaller than the aperture angle of the second portion (22).

10. Stake according to any one of claims 6 to 9, **characterised in that** the surface of the first and/or second further wing (33. 40) extends from the ridge (18) of the third portion (36) and is substantially in the form of a shoe or trapezium when viewed in the direction of the outer surface of the limb (4).

11. Stake according to any one of claims 6 to 10, **characterised in that** the first further wing (38) is of the same length as the second further wing (40).

12. Stake according to claims 6 to 10, **characterised in that** the first further wing (38) is longer than the second further wing (40).

13. Stake according to any one of the preceding claims, **characterised in that** the hook (6) co-operates with an opposite further hook (106) to form a double hook.

14. Stake according to claim 13, **characterised in that** the two-dimensional stamping pattern (34a, 34b, 34c, 34d) is substantially H, M, or U-shaped.

15. Method for producing a stake (1) according to any one of the preceding claims, **characterised by** the following method steps:
preparing sheet metal with a substantially two-dimensional region (10);
stamping, from the two-dimensional region of the sheet metal, a substantially H, M, or U-shaped stamping pattern (34a, 34b, 34c, 34d) which comprises at least one two-dimensional stamping portion;
removing the two-dimensional stamping portion from the sheet metal;
deep-drawing, by means of a stamping tool which acts on both sides of the sheet metal in the two-dimensional region, a hook (6) comprising a first spatially formed ridge-shaped portion (12), which extends from the two-dimensional region, and also a second ridge-shaped portion (22) adjacent thereto, which defines the receiving region (20) for the hook;
shaping the sheet metal into a profile comprising at least one limb (4), in such a way that the two-dimensional region is arranged in the region of said limb.

## Revendications

1. Echalas (1) comprenant au moins un crochet (6) pour maintenir un fil (8) dans le vignoble et la culture fruitière, qui présente un corps de base (2) comprenant au moins un côté (4) en tôle métallique, sur lequel le crochet (6) est créé par découpage et flexion d'un modèle de découpe (34a, 34b, 34c, 34d) correspondant à la forme en crochet, à partir d'une partie essentiellement plane (10) du côté (4), le crochet (6) comprenant une première section partielle (12) sortant de la partie plane (10) et formée spatialement par emboutissage de la tôle métallique, ainsi qu'une deuxième section partielle (22) se raccordant à la première section partielle et limitant une zone de logement (20) pour le fil (8),
**caractérisé en ce**
**que** la première et la deuxième sections partielles (12, 22) sont exécutées en forme de dos, la deuxième section partielle (22) possédant une première et une deuxième ailes (24, 26) s'étendant de chaque côté du dos (28) en direction allant vers la surface extérieure du côté (4) jusqu'à la zone de logement (20), et en ce que le modèle de découpe présente au moins une section de découpe (34a, 34b, 34c, 34d, 34e) plane définissant la zone de logement (20) pour le fil (8), cette section de découpe étant extraite de la partie plane (10) avant l'emboutissage de la tôle métallique en tant que chute de découpe.

2. Echalas selon la revendication 1,
**caractérisé en ce**
**que** le dos (16) de la première section partielle s'étend au moins de 4 mm, notamment de 6 à 10 mm, au-delà de la partie plane (10).

3. Echalas selon l'une quelconque des revendications précédentes,
**caractérisé en ce**
**que** le dos (28), dans la partie de la deuxième section partielle (22), s'étend essentiellement parallèlement à la surface extérieure du côté (4).

4. Echalas selon l'une quelconque des revendications précédentes,
**caractérisé en ce**
**que** la première section partielle (12) et la deuxième section partielle (22) présentent une forme de section transversale essentiellement en forme de V ou de U.

5. Echalas selon la revendication 4,
**caractérisé en ce**
**que** l'angle d'ouverture de la section transversale en forme de V ou de U de la première section partielle (12) est inférieur à 120°, et en ce que l'angle d'ouverture de la deuxième section partielle (22) est inférieur à l'angle d'ouverture de la première section partielle (12).

6. Echalas selon l'une quelconque des revendications précédentes,
**caractérisé en ce**
**que** le crochet (6) présente une troisième section partielle (36) s'étendant à partir de la deuxième section partielle (22) de manière similaire à un crochet, en direction allant vers la surface extérieure du côté (4).

7. Echalas selon la revendication 6,
**caractérisé en ce**
**que** la troisième section partielle (36) comprend une première et une seconde ailes supplémentaires (38, 40) s'étendant en direction allant vers la surface extérieure du côté.

8. Echalas selon la revendication 7,
**caractérisé en ce**
**que** la première aile (24) et la première aile supplémentaire (38) ainsi que la seconde aile (26) et la seconde aile supplémentaire (40) se confondent les unes aux autres le long du dos (18) de la deuxième section partielle (22).

9. Echalas selon l'une quelconque des revendications 5 à 8,
**caractérisé en ce**
**que** la troisième section partielle (36) présente une forme de section transversale essentiellement en forme de V ou de U, et en ce que l'angle d'ouverture de la troisième section partielle (36) est inférieur à l'angle d'ouverture de la deuxième section partielle (22).

10. Echalas selon l'une quelconque des revendications 6 à 9,
**caractérisé en ce**
**que** la surface de la première et/ou de la seconde ailes supplémentaires (38, 40), vue depuis le dos (18) de la troisième section partielle (36), s'étend en forme de chaussure ou de trapèze en direction allant vers la surface extérieure du côté (4).

11. Echalas selon l'une quelconque des revendications 6 à 10,
**caractérisé en ce**
**que** la première aile supplémentaire (38) présente la même longueur que la seconde aile supplémentaire (40).

12. Echalas selon l'une quelconque des revendications 6 à 10,
**caractérisé en ce**
**que** la première aile supplémentaire (38) présente une longueur plus grande que la seconde aile supplémentaire (40).

13. Echalas selon l'une quelconque des revendications précédentes,
**caractérisé en ce**
**que** le crochet (6) agit avec un autre crochet opposé (106) pour former un crochet double.

14. Echalas selon la revendication 13,
**caractérisé en ce**
**que** le modèle de découpe plan (34a, 34b, 34c, 34d) possède une forme essentiellement en forme de H, de M ou de U avec des coins arrondis.

15. Procédé de fabrication d'un échalas (1) selon l'une quelconque des revendications précédentes, **caractérisé par** les étapes de procédés suivantes :
approvisionnement de tôle métallique comprenant une partie (10) essentiellement plane ;
découpage d'un modèle de découpe (34a, 34b, 34c, 34d) en forme de M, de H ou de U, comprenant au moins une section de découpe plane, dans la partie plane de la tôle métallique ;
extraction de la section de découpe plane hors de la tôle métallique ;
emboutissage d'un crochet (6) comprenant une première section partielle (12) en forme de dos, sortant de la partie plane et formée spatialement, ainsi qu'une deuxième section partielle (22) en forme de dos s'y raccordant et limitant la zone de logement (20) pour le crochet, au moyen d'un outil d'estampage agissant sur la partie plane de chaque côté de la tôle métallique ;
déformation de la tôle métallique en un profilé comprenant au moins un côté (4), de manière à ce que la partie plane soit disposée dans la partie du côté.
